(19) Europäisches Patentamt
European Patent Office
Office européen des brevets

(11) Veröffentlichungsnummer: **0 218 137 B1**

(12) # EUROPÄISCHE PATENTSCHRIFT

(45) Veröffentlichungstag der Patentschrift: **06.03.91**

(51) Int. Cl.$^5$: **C09B 35/08**, D06P 1/39

(21) Anmeldenummer: **86113003.7**

(22) Anmeldetag: **20.09.86**

Die Akte enthält technische Angaben, die nach dem Eingang der Anmeldung eingereicht wurden und die nicht in dieser Patentschrift enthalten sind.

(54) **Wasserlösliche Aminonaphthol-Disazofarbstoffe, ihre Herstellung und Verwendung.**

(30) Priorität: **28.09.85 DE 3534634**

(43) Veröffentlichungstag der Anmeldung:
**15.04.87 Patentblatt 87/16**

(45) Bekanntmachung des Hinweises auf die Patenterteilung:
**06.03.91 Patentblatt 91/10**

(84) Benannte Vertragsstaaten:
**CH DE FR GB IT LI**

(56) Entgegenhaltungen:
**FR-A- 2 149 416**
**GB-A- 378 750**
**LU-A- 63 042**

(73) Patentinhaber: **CASSELLA Aktiengesellschaft**
**Hanauer Landstrasse 526**
**W-6000 Frankfurt am Main 61(DE)**

(72) Erfinder: **Bauer, Wolfgang, Dr.**
**Masurenstrasse 6**
**W-6457 Maintal(DE)**
Erfinder: **Hunger, Klaus, Dr.**
**Johann-Strauss-Strasse 35**
**W-6233 Kelkheim(DE)**

(74) Vertreter: **Urbach, Hans-Georg, Dr. et al**
**Hanauer Landstrasse 526**
**W-6000 Frankfurt am Main 61(DE)**

EP 0 218 137 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft wasserlösliche Disazofarbstoffe der Formel I

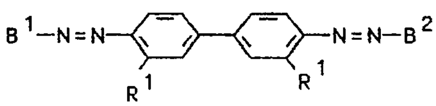

(I)

worin
$R^1$ Alkyl, Alkoxy, Alkoxyethoxy mit jeweils 3-6 C-Atomen,
$B^1$ den Rest einer gegebenenfalls N-monosubstituierten 1-Amino-8-hydroxy-naphthalin-mono- oder -disulfonsäure der Formel II

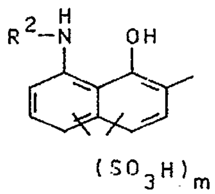

(II)

,

$R^2$ Wasserstoff, Alkyl mit 1-4 C-Atomen, Hydroxyalkyl mit 2-4 C-Atomen, Sulfoalkyl oder Carboxyalkyl mit 1-4 C-Atomen bedeutet,
m für 1 oder 2 steht
und
$B^2$ gleich $B^1$ ist oder
den Rest einer Kupplungskomponente der 1-Naphthol-Reihe der Formel III oder 2-Naphthol-Reihe der Formel IV

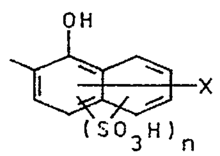

(III)

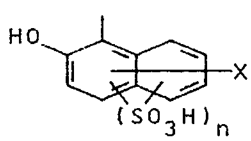

(IV)

bedeutet,
wobei X für Wasserstoff, -OH, $-NH_2$, $-NH-R^2$, -Cl, -COOH, -CO-NH-Ar und n für 0, 1 und 2 steht und Ar gegebenenfalls substituiertes Phenyl oder Naphthyl ist.

Der Substituent X kann in den Stellungen 3 bis 8 des 1- bzw 2-Naphtholrestes stehen, soweit diese nicht durch Sulfogruppen besetzt sind. Das gleiche gilt für die eventuell vorhandenen 1 oder 2 Sulfogruppen in den Naphtholresten der Formeln III und IV. Der durch beide Ringe des Naphthalingerüstes gezogene Bindungsstrich zum X bzw. die in beide Ringe gerichteten Bindungen der Sulfogruppen ( $SO_3H)m$ bzw. $(SO_3H)n$ symbolisieren diesen Sachverhalt.

Die Farbstoffe der Formel I, deren Sulfogruppen und gegebenenfalls vorhandene Carboxylgruppen vorzugsweise in Form der Alkali- und/oder Ammonium-Salze vorliegen, eignen sich hervorragend zum Färben und Bedrucken hydroxylgruppenhaltiger und stickstoffhaltiger natürlicher oder synthetischer Fasermaterialien sowie für Aufzeichnungsflüssigkeiten.

Der für $R^1$ stehende Alkyl- oder Alkoxyrest sowie die Alkoxygruppe in dem für $R^1$ stehenden Alkoxyethoxyrest können geradkettig oder verzweigt sein. Beispiele für diese Reste sind: n-Propyl, iso-Propyl, n-Butyl, i-Pentyl, iso-Pentyl, neo-Pentyl, n-Hexyl, iso-Hexyl, 3,3-Dimethylbutyl, n-Propoxy, iso-Propoxy, n-Butoxy, n-Pentyloxy, iso-Pentyloxy, neo-Pentyloxy, n-Hexyloxy, isoHexyloxy, Methoxyethoxy, Ethoxyethoxy, n-Propoxyethoxy, iso-Propoxyethoxy, n-Butoxyethoxy, iso-Butoxyethoxy. Bei den Alkoxyethoxyresten steht der Alkoxyrest in 2-Stellung des Ethoxyrests.

Bevorzugte Reste $R^1$ sind Alkyl, Alkoxy oder Alkoxyethoxy mit jeweils 3 oder 4 C-Atomen.

$R^2$ steht beispielsweise für Wasserstoff, Methyl, Ethyl, n-Propyl, iso-Propyl, n-Butyl, iso-Butyl, sec.-Butyl, tert.-Butyl, 2-Hydroxyethyl, 3-Hydroxypropyl, 4-Hydroxybutyl, 2-Sulfoethyl, 4-Sulfobutyl, Carboxymethyl, 2-Carboxyethyl, 3-Carboxypropyl. Bei dem Rest der Formel II steht $R^2$ vorzugsweise für Wasserstoff.

Vorzugsweise befinden sich die Sulfogruppen in den 1-Amino-8-naphtholresten der Formel II in den 2-, 3-, 4-oder 6-Stellungen, insbesondere bei m = 1 in der 4-Stellung, und bei m = 2 in der 2,4-, 3,6- und 4,6-Stellung.

Besonders bevorzugte Kupplungskomponenten, von denen sich $B^1$ ableitet und $B^2$ ableiten kann, sind 1-Amino-8-hydroxy-naphthalin-3,6-disulfonsäure, 1-Amino-8-hydroxy-naphthalin-4,6-disulfonsäure, 1-Amino-8--hydroxy-naphthalin-2,4-disulfonsäure, 1-Amino-8-hydroxy-naphthalin-4-sulfonsäure.

In den 1- bzw. 2-Naphtholresten der Formeln III und IV befinden sich die evtl. vorhandenen Sulfogruppen vorzugsweise in 3-, 4-, 6- oder 8-Stellung, insbesondere bei n = 1 in 3-, 4- oder 6-Stellung, und bei n = 2 in 3,6- oder 6,8-Stellung. Die Substituenten X stehen vorzugsweise in 3-, 7- oder 8-Stellung.

Die für Ar stehenden Phenyl- und Naphthylreste können unsubstituiert sein oder bis zu drei der folgenden Substituenten aufweisen: Chlor, Brom, Nitro, Alkyl und/oder Alkoxy mit jeweils 1 oder 2 C-Atomen. Ein für Ar stehender Phenylrest ist vorzugsweise unsubstituiert oder in den Stellungen 2 bis 5 durch einen der oben genannten Substituenten monosubstituiert oder durch einen der obigen Substituenten und eine Alkyl- oder Alkoxygruppe mit 1 oder 2 C-Atomen disubstituiert oder durch einen der obigen Substituenten und eine Alkyl- oder Alkoxygruppe und eine Alkoxygruppe mit 1 oder 2 C-Atomen trisubstituiert. Ein für Ar stehender Naphthylrest ist vorzugsweise unsubstituiert.

Besonders bevorzugte 1- und 2-Naphthol-Kupplungskomponenten, von denen sich $B^2$ ableiten kann, sind 1-Naphthol, 1-Naphthol-4-sulfonsäure, 1,7-Dihydroxy-naphthalin-3-sulfonsäure, 1,8-Dihydroxy-naphthalin-3,6-disulfonsäure, 2-Amino-8-hydroxy-naphthalin-6-sulfosäure, 3-Amino-5-hydroxy-naphthalin-7-sulfosäure, 2-Methylamino-8-hydroxy-naphthalin-6-sulfosäure, 2-Phenylmino-8-hydroxy-naphthalin-6-sulfosäure, 2-(2-Hydroxyethyl)-amino-8-hydroxy-naphthalin-6-sulfosäure, 2-Carboxymethylamino-8-hydroxy-naphthalin-6-sulfosäure, 2 Sulfomethylamino-8-hydroxy-naphthalin-6-sulfosäure, 2-Naphthol, 2-Naphthol-6-sulfosäure, 2-Naphthol-3,6-disulfosäure, 2-Hydroxy-naphthoesäure-3, 2-Naphthol-6,8-disulfosäure, 2-Hydroxy-naphthoesäure-3-anilid, 1-Chlor-8-hydroxy-naphthalin-3,6-disulfonsäure.

Bevorzugte erfindungsgemäße Disazofarbstoffe sind solche, in denen $B^1$ und $B^2$ den Rest einer gegebenenfalls N-monosubstituierten 1-Amino-8-hydroxy-naphthalin-3,6-, -4,6-oder -2,4-disulfonsäure darstellt.

Bevorzugte Farbstoffe sind auch solche, in denen $B^1$ und $B^2$ gleich sind, ferner solche, in denen $R^1$ n-Propyl, iso-Propyl, n-Butyl, sec.-Butyl, iso-Butyl, n-Propoxy, iso-Propoxy, n-Butoxy, iso-Butoxy, sec.-Butoxy, Methoxyethoxy, Ethoxyethoxy bedeutet und weiterhin solche, bei denen die Gesamtzahl der Sulfogruppen n + m 3 oder 4 ist.

Besonders bevorzugt sind insbesondere auch solche erfindungsgemäßen Farbstoffe, die zwei oder mehrere bevorzugte Merkmale aufweisen.

Die erfindungsgemäßen, wasserlöslichen Disazofarbstoffe der Formel I

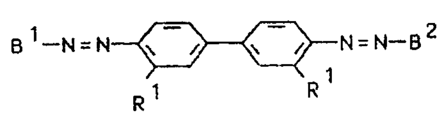

(I)

worin $B^1$, B2 und $R^1$ die oben genannten Bedeutungen aufweisen, werden hergestellt, indem man aus 3,3'-disubstituierten Benzidin-derivaten der Formel V in üblicher Weise hergestellte Bisdiazoniumverbindungen der Formel VI

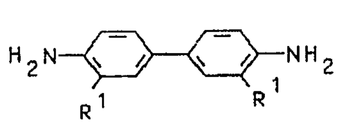

(V)

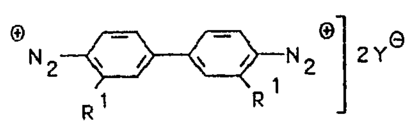

(VI)

worin $Y^{\ominus}$ ein Äquivalent eines Anions einer Mineralsäure ist, im alkalischen, vorzugsweise wäßrigen, Reaktionsmedium nacheinander in beliebiger Reihenfolge mit je einem mol pro mol Bisdiazoniumverbindung der Kupplungskomponenten $B^1$-H und $B^2$-H kuppelt.

Man kann die erfindungsgemäßen Farbstoffe somit herstellen, indem man im alkalischen Reaktionsmedium zunächst ein mol einer Kupplungskomponente der Formel $B^1$-H pro mol Bisdiazoniumverbindung, wobei $B^1$ die oben genannte Bedeutung hat, zu einem diazotierten Monoazofarbstoff der Formel VII

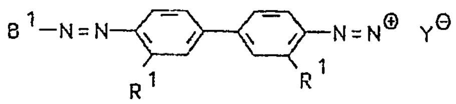

(VII)

kuppelt.

Durch alkalische Kupplung des so erhaltenen diazotierten Monoazofarbstoffs der Formel VII mit einem mol einer Kupplungskomponete der Formel $B^2$-H werden anschließend die Endfarbstoffe der Formel I erhalten.

Alternativ lassen sich die erfindungsgemäßen Disazofarbstoffe auch durch Kupplung der Bisdiazoniumverbindungen der Formel VI mit einem mol einer Kupplungskomponente der Formel $B^2$-H pro mol Bisdiazoniumverbindung zu diazotierten Monoazofarbstoffen der Formel VIII

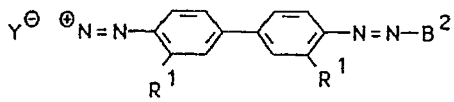

(VIII)

und anschließende Schlußkupplung mit einem mol einer Kupplungskomponente der Formel $B^1$-H herstellen.

Es ist selbstverständlich, daß zur Herstellung von erfindungsgemäßen Farbstoffen, in denen $B^1$ gleich $B^2$ ist, keine zweistufige Kupplung vorgenommen werden muß, sondern die Bisdiazoniumverbindung der Formel VI in einer Stufe mit 2 mol der betreffenden Kupplungskomponente umgesetzt werden kann.

Aus den Benzidinderivaten der allgemeinen Formel V werden die Bisdiazoniumverbindungen in an sich bekannter Weise durch Einwirkung von mindestens 2 mol salpetriger Säure oder anderen Nitrosoniumionen bildenden Systemen in einer Mineralsäure oder einem mineralsauren wäßrigen Medium, einer Niederalkancarbonsäure, wie z.B. Ameisensäure, Essigsäure oder Propionsäure oder deren Mischungen, bei Temperaturen von -15 °C bis 40 °C erhalten.

Bevorzugtes Diazotierungsmedium ist verdünnte wäßrige Mineralsäure, insbesondere diejenige, die das Anion-Äquivalent $Y^{\ominus}$ liefern kann. Das Anionäquivalent kann ein einwertiges Anion, wie z.B. $Cl^{\ominus}$, $NO_3^{\ominus}$, sein, aber auch das Äquivalent eines mehrwertigen Anions, wie z.B. $\frac{1}{2}\ SO_4^{2\ominus}$ oder $\frac{1}{3}\ PO_4^{3\ominus}$. Als Säuren kommen somit vorzugsweise z.B. Halogenwasserstoffsäure, insbesondere Salzsäure, Schwefelsäure oder Phosphorsäure in Betracht.

Die beschriebenen, im pH-Bereich 7 bis 14, vorzugsweise 7,5 bis 10, durchgeführten Kupplungsreaktionen erfolgen bevorzugt im wäßrigen Reaktionsmedium, wobei an sich bekannte Kupplungsbeschleuniger wie Pyridin, Dimethylformamid, Harnstoff oder Thioharnstoff zugegen sein können.

Die in den erfindungsgemäßen Farbstoffen eingebauten Mittelkomponenten der Formel V haben sich in den bisher durchgeführten Tests als toxikologisch unbedenklich erwiesen.

Die erfindungsgemäßen Farbstoffe eignen sich hervorragend zum Färben hydroxylgruppen- oder stickstoffhaltiger, natürlicher oder synthetischer Fasermaterialien, insbesondere von Baumwolle, Regeneratcellulose, Papier, Wolle, Seide, Polyamid, Leder sowie für Aufzeichnungs flüssigkeiten. Auf den genannten Substraten erhält man blaue Färbungen, die eine hohe Farbstärke aufweisen. Die Färbungen zeichnen sich durch gute Echtheitseigenschaften, insbesondere durch gute Naßechtheiten, beispielsweise Wasserechtheit, Wäsche 40 °C, Wäsche 60 °C, sowie durch gute Schweißechtheiten (alkalisch und sauer), Säureechtheit, Lösungsmittelechtheit und Reibechtheit aus.

Beispiel 1:

a) 40,8 g 3,3'-Di-n-butoxy-benzidin-dihydrochlorid werden in 100 ml Wasser eingetragen, mit 150 g Eis und 40 ml 10 N Salzsäure versetzt und bei 0 - 5 °C mit einer Lösung von 14,4 g Natriumnitrit in 40 ml Wasser tetrazotiert. Man rührt ca. 1/2 Stunde nach und entfernt dann den Nitritüberschuß durch Zusatz von Amidosulfonsäure. Die Lösung der so hergestellten Tetrazoverbindung wird anschließend im Verlauf von 1/2 Stunde zu einer Mischung von 66,9 g 1-Amino-8-hydroxy-naphthalin-3,6-disulfonsäure, 22 ml 10 N Natronlauge und 100,6 g Natriumcarbonat in 300 ml Wasser und 200 g Eis gegeben.

Man rührt das Reaktionsgemisch 3 Stunden bei 0 - 5 °C und pH: 8-9 nach und fügt dann 200 g Natriumchlorid sowie 160 ml 10 N Salzsäure bis zu einem pH-Wert von 1 zu.

Der danach angefallene blaue Disazofarbstoff der Struktur

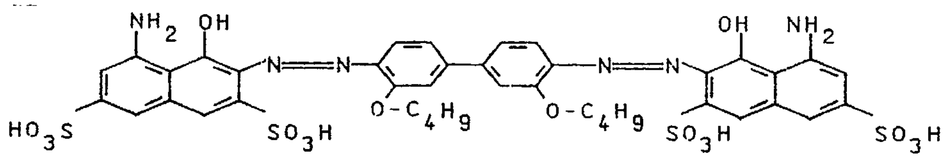

wird abfiltriert und bei 70 °C getrocknet.

Ausbeute: 223,8 g blaues Farbstoffpulver
(Reinfarbstoff-Gehalt: 43,2 % )

b) In einem Färbebad stellt man bei 40 °C eine Lösung von 0,2 g Natriumcarbonat, 4 g Natriumsulfat und 1,5 g Des nach Beispiel 1a) hergestellten Farbstoffs in 250 ml Wasser her. In der fertigen Färbeflotte hält man anschließend 10 g Baumwoll-Garn ständig in Bewegung, erhöht die Temperatur auf 95 °C und färbt 45 Minuten bei dieser Temperatur weiter.

Das gefärbte Baumwoll-Garn wird darauf der nur noch schwach gefärbten Restflotte entnommen und noch anhaftende Restflotte durch Auswringen entfernt. Anschließend spült man das gefärbte Material mit kaltem Wasser und trocknet es bei 60 °C.

Man erhält eine blaue Färbung hoher Farbstärke mit guten Echtheitseigenschaften, insbesondere guter Wasser-, Wasch- und Schweißechtheit.

Auf Papier, Polyamid oder Leder erhält man mit dem nach Beispiel 1 hergestellten Disazofarbstoff ebenfalls blaue, farbechte Färbungen mit gutem Echtheitsniveau.

Beispiel 2:

34,5 g 3,3'-Di-iso-propyl-benzidin-dihydrochlorid werden in einer Mischung von 100 ml Wasser, 40 ml 10 N Salzsäure und 150 g Eis bei 0 - 5 °C mit einer Lösung von 14,4 g Natriumnitrit in 40 ml Wasser tetrazotiert. Man rührt 1 Stunde bei 0 - 5 °C nach, entfernt überschüssige salpetrige Säure durch Zusatz von Amidosulfonsäure und stumpft die Tetrazolösung vorsichtig mit 4 g Natriumcarbonat bis zu einem pH-Wert von 2 ab. Nach Klärfiltration wird die Tetrazolösung innerhalb von 10 Minuten bei 0 °C mit einer Lösung von 36,3 g 1-Amino-8-hydroxy-naphthalin-3,6-disulfonsäure, di-Natriumsalz und 22,8 g Natriumcarbonat in 120 ml Wasser versetzt. Man läßt die Mischung 10 Minuten nachrühren und gibt dann rasch eine Lösung von 26,1 g 2-Amino-8-hydroxy-naphthalin-6-sulfonsäure, mono-Natriumsalz und 6 g Natriumcarbonat in 100 ml Wasser zu.

Anschließend rührt man die erhaltene Mischung 3 Stunden bei pH: 8-9 nach, setzt ihr zur Verbesserung der Filtrierform des Farbstoffs 20 Vol.% Natriumchlorid zu und stellt durch Zusatz von 10 N Salzsäure den pH-Wert auf 2. Der erhaltene Farbstoff der Formel

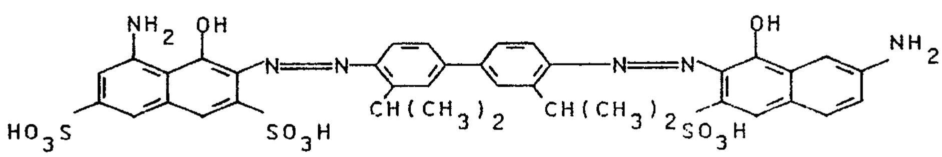

wird abfiltriert und bei 70 800 °C getrocknet.

Ausbeute: 218,6 g dunkles Pulver
(Farbstoff-Gehalt: 38 %)

Auf Baumwolle, Polyamid oder Leder erhält man mit diesem Farbstoff blaue, farbstarke Färbungen mit guten Echtheitseigenschaften, insbesondere guter Wasser- und Schweißechtheit.

Der folgenden Tabelle sind weitere erfindungsgemäße blaue Aminonaphthol-Disazofarbstoffe zu entnehmen, die z.B. nach den Angaben der Beispiele 1 bzw. 2 hergestellt werden können, wobei angeführt ist:

In Spalte 1: der Rest $R^1$ des eingesetzten 3,3'-disubtistuierten Benzidin-Derivats.
In Spalte 2: Die Kupplungskomponente der Formel $B^1$-H .
In Spalte 3: Die Kupplungskomponente der Formel $B^2$-H .

## Tabelle

Aminonaphthol-Disazofarbstoffe der Formel

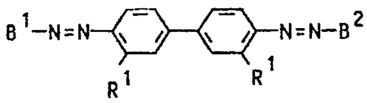

| Beispiel | Substituent $R^1$ | Rest der Formel $B^1$ | Rest der Formel $B^2$ |
|---|---|---|---|
| 3 | $-O-CH_2-CH_2-OCH_3$ | 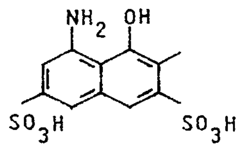 | 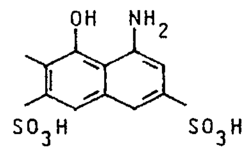 |
| 4 | $-CH(CH_3)_2$ | 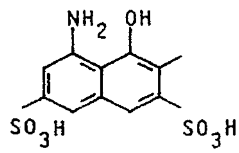 | 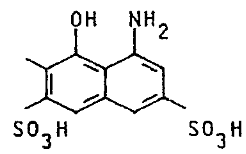 |
| 5 | $-O-CH_2-CH_2-CH_3$ | 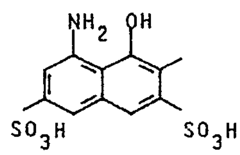 | 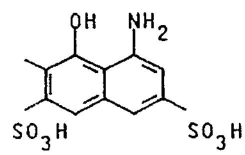 |
| 6 | $-O-n-C_4H_9$ | 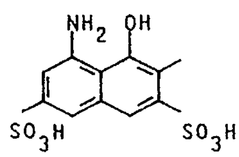 | 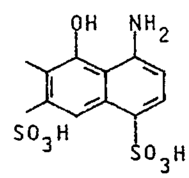 |
| 7 | $-O-n-C_4H_9$ | 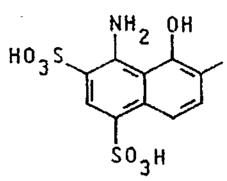 | 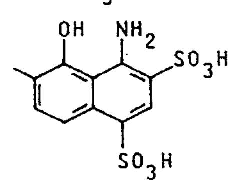 |
| 8 | 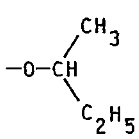 | 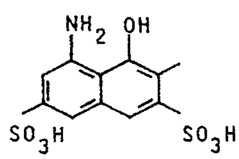 | 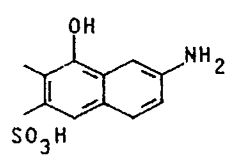 |

| Beispiel | Substituent | Rest der Formel | |
|---|---|---|---|
| | $R^1$ | $B^1$ | $B^2$ |
| 9 | $-CH(CH_3)_2$ | 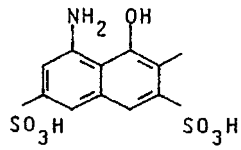 | 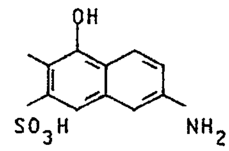 |
| 10 | $-CH(CH_3)_2$ | 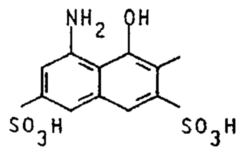 | 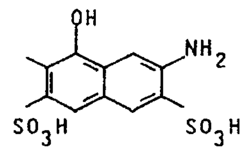 |
| 11 | $-CH(CH_3)_2$ | 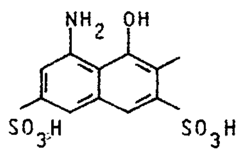 | 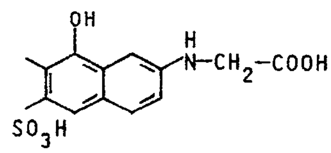 |
| 12 | $-CH(CH_3)_2$ | 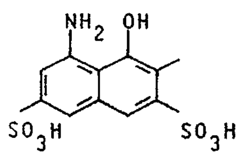 | 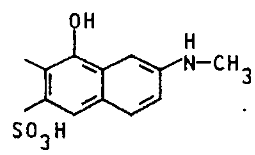 |
| 13 | $-CH(CH_3)_2$ | 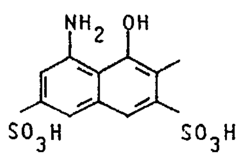 | 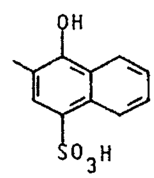 |
| 14 | $-O-n-C_4H_9$ | 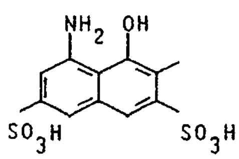 | 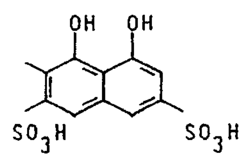 |

| Beispiel | Substituent | Rest der Formel | |
|---|---|---|---|
| | $R^1$ | $B^1$ | $B^2$ |
| 15 | $-O-n-C_4H_9$ | 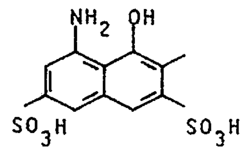 | 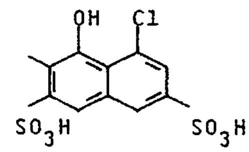 |
| 16 | $-CH(CH_3)_2$ | 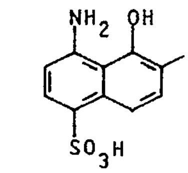 | 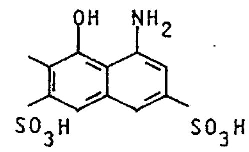 |
| 17 | $-O-n-C_4H_9$ | 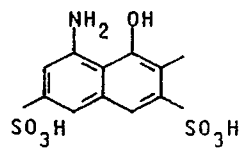 | 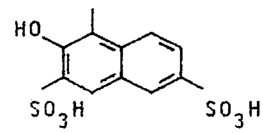 |
| 18 | $-O-n-C_4H_9$ | 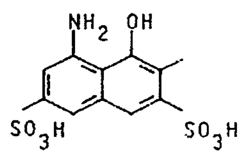 | 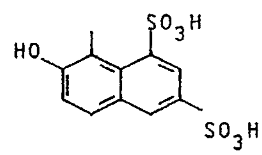 |

Die FR-A -2,149,416 betrifft Disazofarbstoffe, die in Form der freien Säure der Formel:

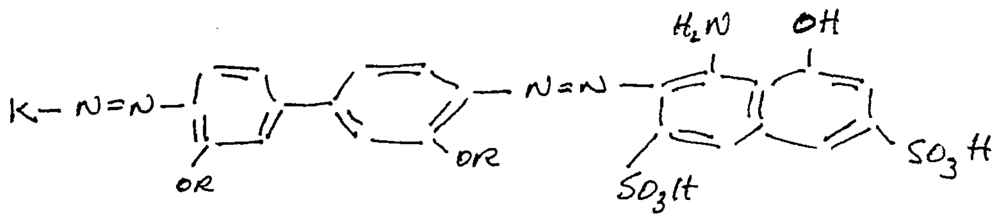

entsprechen, wobei K der Rest einer Kupplungskomponente aus der Reihe des Hydroxynaphthalins oder des Aminonaphthalins und R ein Alkylradikal mit 1 bis 6 C-Atomen ist.

## Ansprüche

1. Wasserlösliche Disazofarbstoffe der Formel I

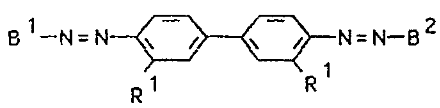

(I)

worin
$R^1$ Alkyl, Alkoxy, Alkoxyethoxy mit jeweils 3-6 C-Atomen,
$B^1$ den Rest einer gegebenenfalls N-monosubstituierten 1-Amino-8-hydroxy-naphthalin-mono- oder -disulfonsäure der Formel II

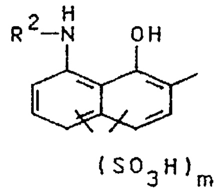 ,

(II)

$R^2$ Wasserstoff, Alkyl mit 1-4 C-Atomen, Hydroxyalkyl mit 2-4 C-Atomen, Sulfoalkyl oder Carboxyalkyl mit 1-4 C-Atomen bedeutet,
m für 1 oder 2 steht
und
$B^2$ gleich $B^1$ ist oder
den Rest einer Kupplungskomponente der 1-Naphthol-Reihe der Formel III oder 2-Naphthol-Reihe der Formel IV

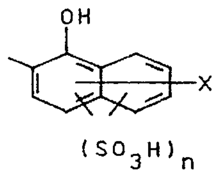

(III)

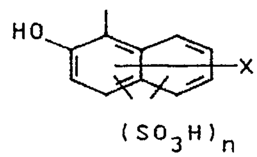

(IV)

bedeutet, wobei X für Wasserstoff, -OH, $-NH_2$, $-NH-R^2$, -Cl, -COOH, -CO-NH-Ar und n für 0, 1 und 2 steht und Ar gegebenenfalls substituiertes Phenyl oder Naphthyl ist und ihre Alkali- und/oder Ammoniumsalze.

**2.** Wasserlösliche Disazofarbstoffe gemäß Anspruch 1, dadurch gekennzeichnet, daß $R^1$ Alkyl, Alkoxy, Alkoxyethoxy mit jeweils 3 - 4 C-Atomen ist.

**3.** Wasserlösliche Disazofarbstoffe gemäß den Ansprüchen 1 und 2, dadurch gekennzeichnet, daß die Summe der Anzahl der Sulfogruppen $m + n = 3$ oder 4 ist.

**4.** Wasserlösliche Disazofarbstoffe gemäß den Ansprüchen 1 bis 3, dadurch gekennzeichnet, daß $B^2$ identisch mit $B^1$ ist.

**5.** Wasserlösliche Disazofarbstoffe gemäß den Ansprüchen 1 bis 4, dadurch gekennzeichnet, daß $B^1$ und $B^2$ den Rest einer gegebenenfalls N-monosubstituierten 1-Amino-8-hydroxy-naphthalin-3,6-, -4,6- oder -2,4-disulfonsäure darstellt.

**6.** Verfahren zur Herstellung wasserlöslicher Disazofarbstoffe der Formel I

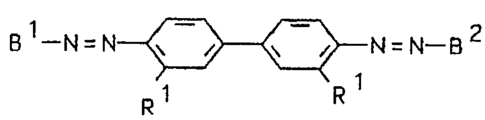

(I)

worin $B^1$, $B^2$ und $R^1$ die im Anspruch 1 angegebenen Bedeutungen haben, dadurch gekennzeichnet, daß man 3,3'-disubstituierte Benzidin-derivate der Formel V

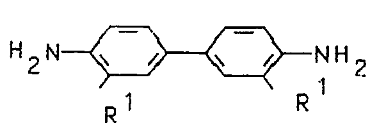

(V)

zu Bisdiazoniumverbindungen der Formel VI

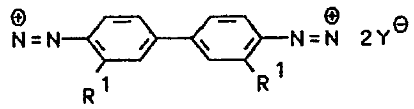

(VI)

bisdiazotiert, worin $Y^{\ominus}$ ein Äquivalent eines Anions einer Mineralsäure ist, und im alkalischen, vorzugsweise wäßrigen, Reaktionsmedium nacheinander in beliebiger Reihenfolge mit je einem mol der Kupplungskomponenten $B^1$-H und $B^2$-H pro mol Bisdiazoniumverbindung kuppelt.

7. Verwendung der wasserlöslichen Disazofarbstoffe gemäß den Ansprüchen 1 bis 5 zum Färben und Bedrucken von hydroxylgruppen- oder stickstoffhaltigen, natürlichen oder synthetischen Fasermaterialien sowie zur Herstellung von Aufzeichnungsflüssigkeiten.

## Claims

1. Water-soluble disazo dyestuffs of the formula I

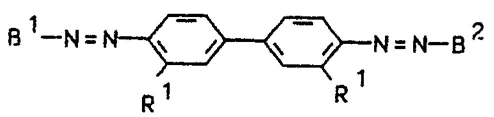

(I)

wherein $R^1$ denotes alkyl, alkoxy, alkoxyethoxy having in each case 3 to 6 C atoms, $B^1$ denotes the radical of an optionally N-monosubstituted 1-amino-8-hydroxynaphthalinemonosulphonic or 1-amino-8-hydroxynaphthalinedisulphonic acid of the formula II

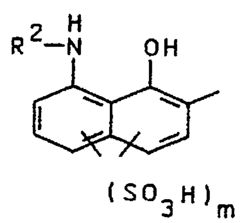

(II)

,

$R^2$ denotes hydrogen, alkyl having 1 to 4 C atoms, hydroxyalkyl having 2 to 4 C atoms, sulphoalkyl or carboxyalkyl having 1 to 4 C atoms, m represents 1 or 2 and $B^2$ is equal to $B^1$ or denotes the radical of a coupling component of the 1-naphthol series of the formula III or 2-naphthol series of the formula IV

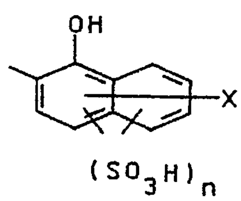

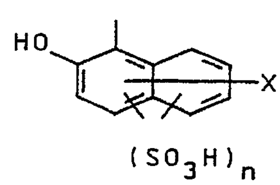

wherein X represents hydrogen, -OH, $-NH_2$, -NH- $R^2$, -Cl, -COOH, -CO-NH-Ar and n represents 0, 1 or 2 and Ar is optionally substituted phenyl or naphthyl or their alkali metal and/or ammonium salts.

2. Water-soluble disazo dyestuffs according to Claim 1, characterized in that $R^1$ is alkyl, alkoxy, alkoxyethoxy having in each case 3 to 4 C atoms.

3. Water-soluble disazo dyestuffs according to Claims 1 and 2, characterized in that the total number of sulpho groups, m + n, is 3 or 4.

4. Water-soluble disazo dyestuffs according to Claims 1 to 3, characterized in that $B^2$ is identical to $B^1$.

5. Water-soluble disazo dyestuffs according to Claims 1 to 4, characterized in that $B^1$ and $B^2$ represent the radical of an optionally N-monosubstituted 1-amino-8-hydroxy-naphthaline-3,6-, -4,6- or -2,4- disulphonic acid.

6. Process for the preparation of water-soluble disazo dyestuffs of the formula I

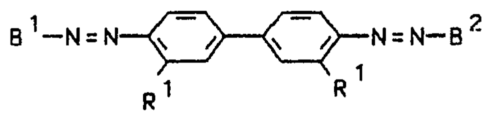

(I)

wherein $B^1$, $B^2$ and $R^1$ have the meanings indicated in Claim 1, characterized in that 3,3'-disubstituted benzidine derivatives of the formula V

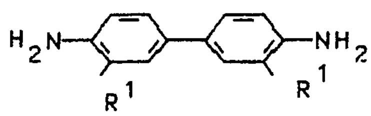

(V)

are bisdiazotized to give bisdiazonium compounds of the formula VI

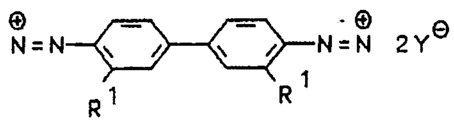

(VI)

wherein $Y^{\ominus}$ is an equivalent of an anion of a mineral acid, and the latter are coupled, successively and in any desired sequence, with 1 mol of the coupling component $B^1$-H and 1 mol of the coupling component $B^2$-H per mol of bisdiazonium compound in an alkaline, preferably aqueous, reaction medium.

7. The use of the water-soluble disazo dyestuffs according to Claims 1 to 5 for dyeing and printing natural or synthetic fibre materials containing hydroxyl groups or nitrogen, and for the production of recording fluids.

## Revendications

1. Colorants disazoïques hydrosolubles qui répondent à la formule I :

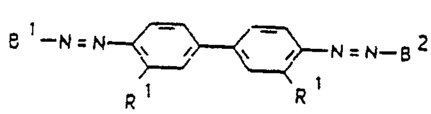

(I)

dans laquelle

$R^1$ représente un alkyle, un alcoxy ou un alcoxy-éthoxy, chacun d'eux contenant de 3 à 6 atomes de carbone,

$B^1$ représente le radical d'un acide amino-1 hydroxy-8 naphtalène-monosulfonique ou -disulfonique, éventuellement monosubstitué à l'azote, qui répond à la formule II :

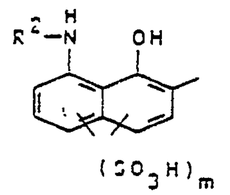

(II)

dans laquelle $R^2$ représente l'hydrogène, un alkyle contenant de 1 à 4 atomes de carbone, un hydroxy-alkyle contenant de 2 à 4 atomes de carbone, un sulfoalkyle contenant de 1 à 4 atomes de carbone ou un carboxyalkyle contenant de 1 à 4 atomes de carbone, et m est égal à 1 ou à 2,
et

$B^2$ est identique à $B^1$ ou représente le radical d'un copulant de la série du naphtol-1 répondant à la formule III ou du naphtol-2 répondant à la formule IV :

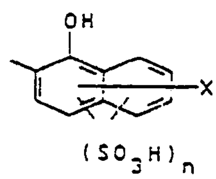

(III)

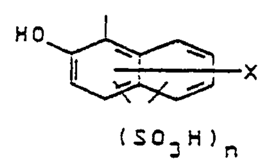

(IV)

formules dans lesquelles X représente l'hydrogène, -OH, $-NH_2$, $-NH-R^2$, -Cl, -COOH ou -CO-NH-Ar , n est égal à 0, à 1 ou à 2 et Ar représente un radical phényle ou naphtyle éventuellement substitué,
ainsi que leurs sels de métaux alcalins et/ou d'ammonium.

**2.** Colorants disazoïques hydrosolubles selon la revendication 1, caractérisés en ce que $R^1$ représente un alkyle, un alcoxy ou un alcoxy-éthoxy contenant chacun 3 ou 4 atomes de carbone.

**3.** Colorants disazoïques hydrosolubles selon l'une des revendications 1 et 2, caractérisés en ce que la somme des nombres des radicaux sulfo m + n est égale à 3 ou à 4.

**4.** Colorants disazoïques hydrosolubles selon l'une quelconque des revendications 1 à 3, caractérisés en ce que $B^2$ est identique à $B^1$.

**5.** Colorants disazoïques hydrosolubles selon l'une quelconque des revendications 1 à 4, caractérisés en ce que $B^1$ et $B^2$ représentent chacun le radical d'un acide amino-1 hydroxy-8 naphtalène-disulfonique-3,6, -4,6 ou -2,4 éventuellement monosubstitué à l'azote.

**6.** Procédé pour préparer des colorants disazoïques hydrosolubles répondant à la formule I :

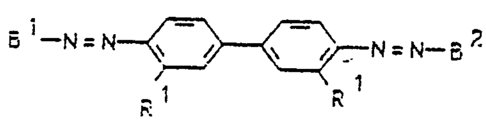

(I)

dans laquelle $B^1$, $B^2$ et $R^1$ ont les significations qui leur ont été données à la revendication 1, procédé caractérisé en ce qu'on bis-diazote des benzidines disubstituées en 3,3' qui répondent à la formule V :

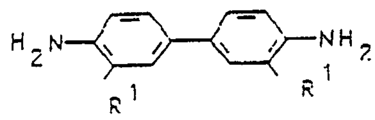

(V)

de manière à obtenir des composés de bis-diazoniums répondant à la formule VI :

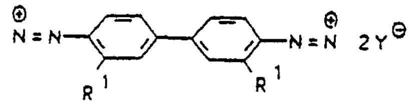

(VI)

dans laquelle $Y^{\ominus}$ représente un équivalent d'un anion d'un acide minéral, et on copule dans un milieu réactionnel alcalin, de préférence aqueux, successivement et dans l'ordre que l'on veut, avec une mole du copulant $B^1$-H et une mole du copulant $B^2$-H , par mole du composé de bis-diazonium.

**7.** Application des colorants disazoïques hydrosolubles selon l'une quelconque des revendications 1 à 5 à la teinture et à l'impression de matières fibreuses naturelles ou synthétiques qui contiennent des radicaux hydroxy ou de l'azote, ainsi qu'à la préparation de liquides d'enregistrement.